# EUROPÄISCHE PATENTANMELDUNG

(11) **EP 1 079 499 A2**
(43) Veröffentlichungstag der Anmeldung: **28.02.2001**
(21) Anmeldenummer: 00117555.3
(22) Anmeldetag: 15.08.2000
(51) Int. Cl.: H02K 1/28, H02K 3/34, H02K 1/26, H02K 15/02

(54) **Vefahren zur Herstellung eines Läufers für einen Elektromotor**

(30) Priorität: 21.08.1999 DE 19939712
(71) Anmelder: Dr. Karl Bausch GmbH & Co., KG, 71665 Vaihingen/Enz (DE)
(72) Erfinder: Die Erfindernennung liegt noch nicht vor
(74) Vertreter: Fleck, Hermann-Josef, Dr.-Ing.

(57) **Zusammenfassung**

Die Erfindung betrifft ein Verfahren zur Herstellung eines Läufers für einen Elektromotor, wobei der Läufer mit einem als Lamellenpaket ausgebildeten Läuferkern ausgestattet ist. Das Lamellenpaket ist aus einzelnen Blech-Lamellen zusammengesetzt, wobei die Lamellen planparallel aneinandergeschichtet und miteinander verbunden sind. Um eine Vereinfachung der Fertigung eines solchen Lamellenpaketes zu erreichen, ist erfindungsgemäss vorgesehen, dass auf ineinander übergehende Aussenflächen der Lamellen eine Klebeschicht aufgebracht ist, die die lose aneinanderliegenden, nicht mechanisch aneinander gekoppelten, einzelnen Lamellen miteinander verbindet.

## Beschreibung

Die Erfindung betrifft ein Verfahren zur Herstellung eines Läufers für einen Elektromotor mit einem Läuferkern, wobei aus einem Blechzuschnitt Lamellen ausgestanzt werden, und wobei mehrere Lamellen planparallel zu einem Lamellenpaket aneinander geschichtet werden.

Die Erfindung bezieht sich auch auf Läufer mit einem als Lamellenpaket ausgebildeten Läuferkern, das aus einzelnen, aus Blech gefertigten Lamellen zusammengesetzt ist, wobei die Lamellen planparallel aneinander geschichtet und miteinander verbunden sind.

Zur Fertigung solcher bekannter Läufer werden aus einem Stahlblechzuschnitt Lamellen ausgestanzt. Die Ausbildung eines Lamellenpaketes erfolgt dadurch, dass mehrere Lamellen mit ihren Seitenflächen aneinander geschichtet sind. Die geschichteten Lamellen können dann mechanisch miteinander verbunden werden, so dass das als Einheit handhabbare Lamellenpaket entsteht. Zur mechanischen Verbindung werden die Lamellen miteinander verprägt. Das Stanzen und Verprägen der Lamellen erfolgt in einer sogenannten Stanz-Paketiermaschine. Die gefertigten Lamellenpakete können mit einer Läuferwelle verpresst werden. Aus Lagerhaltungsgründen hat es sich als vorteilhaft erwiesen, dass die Lamellenpakete zunächst getrennt von den Läuferwellen bevorratet werden. Auf Abruf lassen sich dann die Lamellenpakete mittels der Läuferwellen individualisieren.

Bei der vorstehend beschriebenen Vorgehensweise zur Fertigung eines Läufers hat sich ergeben, dass die eingesetzten Stanz-Paketierwerkzeuge hohe Werkzeugkosten verursachen. Diese werden auch noch durch die hohe Störanfälligkeit der Stanz-Paketierwerkzeuge zusätzlich beeinflusst.

Es ist Aufgabe der Erfindung, einen Läufer bzw. ein Verfahren zur Herstellung eines Läufers der eingangs erwähnten Art zu schaffen, wobei auf den Einsatz der bekannten Stanz-Paketierwerkzeuge verzichtet werden kann.

Diese Aufgabe wird dadurch gelöst, dass auf Aussenflächen der lose aneinander geschichteten, nicht miteinander verbundenen Lamellen ein Binde-Medium aufgebracht wird, dass das Binde-Medium zur Aushärtung gebracht wird, und dass mittels des ausgehärteten Binde-Mediums die Lamellen in ihrer Endlage fest miteinander verbunden werden.

Mit einer solchen Ausgestaltung eines Läufers übernimmt das ausgehärtete Binde-Medium die Verbindungsfunktion zwischen den einzelnen Lamellen des Lamellenpaketes. Der Einsatz der kostenaufwendigen Stanz-Paketiermaschine kann entfallen. Die Lamellenpakete können als eigenständige Einheiten weiterhin getrennt von den Läuferwellen bevorratet werden, womit die vorstehend beschriebenen logistischen Vorteile erhalten bleiben.

Gemäss einer bevorzugten Erfindungsgestaltung ist vorgesehen, dass als teigiges oder flüssiges Binde-Medium ein elektrisch isolierendes Material, insbesondere ein Kunststoff auf die Aussenflächen aufgebracht wird. Das isolierende Material kann insbesondere auf die Aussenflächen der Lamellen aufgebracht werden, die die Wicklungsschlitze des Läuferkerns begrenzen, um eine Isolations des Lamellenpaketes gegenüber den aufzubringenden Drahtwicklungen des Elektromotors bewirken zu können. Demnach übernimmt das ausgehärtete Binde-Medium nebst seiner Lamellen-Verknüpfungsfunktion die weiteren Aufgaben der Erzeugung einer Grundisolation.

Bevorzugterweise kann dabei vorgesehen sein, dass zur Aufbringung des Binde-Mediums ein Kunststoff-Harzpulver, insbesondere ein Epoxidharzpulver auf die zu beschichtenden Aussenflächen aufgebracht wird, und dass das Kunststoffharzpulver zur Vernetzung gebracht wird.

Zur passgenauen Aneinanderschichtung der Lamellen kann ein erfindungsgemässes Verfahren dergestalt sein, dass die einzelnen Lamellen des Lamellenpaketes mit zueinander fluchtenden Durchbrüchen versehen sind, dass durch die Durchbrüche eine Zentriervorrichtung hindurchgeführt wird, die die Lamellen gegeneinander ausrichtet, dass nach erfolgter Ausrichtung die Lamellen mittels des Binde-Mediums miteinander verbunden werden, und dass anschliessend die Zentriervorrichtung aus den Durchbrüchen entnommen wird. Hierbei können die zentralen Läuferwellen-Aufnahmen der Lamellen als Durchbrüche genutzt werden.

Um die bei der Rotation eines Lamellenpaketes auftretenden Unwuchten zu minimieren, kann vorgesehen sein, dass die einzelnen Lamellen aus dem Blechzuschnitt ausgestanzt werden und in Bezug auf ihre Ausstanzlage zueinander verdreht aneinander geschichtet werden, und/oder dass die Lamellen aus dem Blechzuschnitt ausgestanzt und unverdreht zu Teil-Lamellenpaketen aneinander geschichtet werden, und dass die Teil-Lamellenpakete dann gegenüber ihrer Ausstanzlage verdreht aneinander gesetzt werden.

Die vorstehend beschriebene Aufgabe der Erfindung wird auch alleine oder in Kombination mit einem oder mehreren der oben geannnten Merkmale dadurch gelöst, dass auf ineinander übergehende Aussenflächen der Lamellen eine Klebeschicht aufgebracht ist, die die lose aneinanderliegenden, nicht mechanisch aneinander gekoppelten einzelnen Lamellen miteinander verbindet.

Eine bevorzugte Erfindungsgestaltung kann dabei dadurch gekennzeichnet sein, dass die Lamellen ein Basisteil aufweisen, von dem sich sternförmig Stege radial nach aussen erstrecken, dass zwischen benachbarten Stegen Wicklungsschlitze gebildet sind, die von Aussenflächen der Stege begrenzt sind, und dass die Lamellen im Bereich dieser Aussenflächen mittels der elektrisch isolierenden Klebeschicht miteinander verbunden sind und dass die senkrecht zur Rotationsachse des Läuferkerns verlaufenden Abschlussflächen der beiden endseitig am Lamellenpaket angeordneten Lamellen mittels der elektrisch isolierenden Klebeschicht zumindest teilweise beschichtet sind. Die Klebeschicht bewirkt dann auch die Grundisolation des Lamellenpaketes. Um den Einsatz von im Durchmesser gestuften Läuferwellen zu ermöglichen, kann vorgesehen sein, dass der Läuferkern aus wenigstens zwei Teil-Lamellenpaketen zusammengesetzt ist, wobei die Lamellen der Teil-Lamellenpakete mit Identischen zentrischen Wellenaufnahmen versehen, die Wellenaufnahmen der Teil-Lamellenpakete jedoch unterschiedliche Öffnungsweiten aufweisen, und dass die Wellenaufnahmen der einzelnen Teil-Lamellenpakete zueinander bezüglich ihrer Mittellängsachse fluchtend angeordnet sind. Gestufte Läuferwellen werden vornehmlich dann verwendet, wenn die Lamellenpakete eine grosse axiale Erstreckung aufweisen, also eine Vielzahl von Lamellen aneinander geschichtet sind.

Die Erfindung wird im Folgenden anhand eines in der Zeichnung dargestellten Ausführungsbeispieles näher erläutert. Es zeigen:
- Fig. 1: in Draufsicht ein Lamellenpaket für einen Läuferkern eines Elektromotores,
- Fig. 2: das Lamellenpaket gemäss Fig. 1 in Seitenansicht,
- Fig. 3: die Darstellung gemäss Fig. 1, jedoch mit in das Lamellenpaket eingeschobener Läuferwelle, und
- Fig. 4: die Darstellung gemäss Fig. 3 in Seitenansicht.

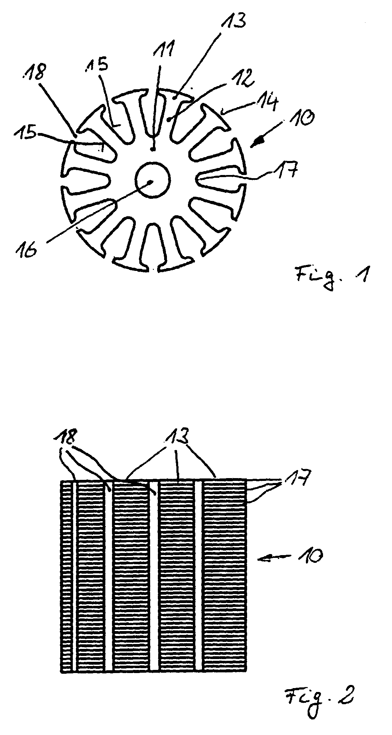

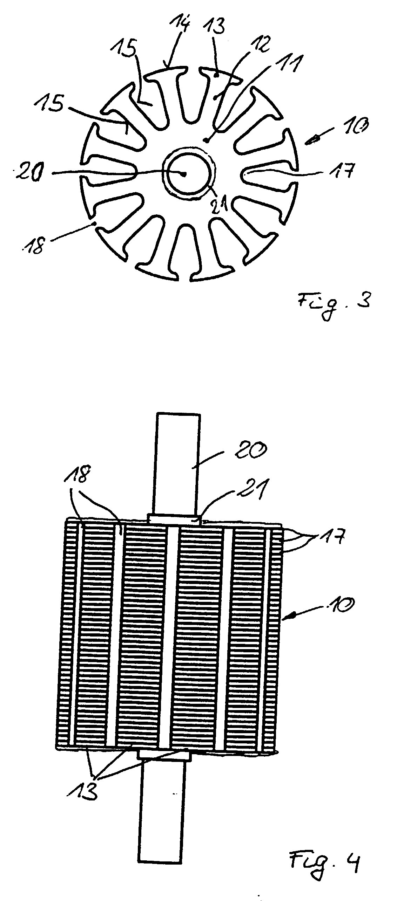

In den Fig. 1 und 2 ist ein Lamellenpaket für einen Läuferkern 10 dargestellt. Das Lamellenpaket ist aus einer Vielzahl von aneinander geschichteten Lamellen 17 gebildet, die planparallel aneinanderliegen. Die Lamellen 17 sind dabei identisch ausgebildet. Sie weisen ein Basisteil 11 auf, das mit einem zentrischen Durchbruch versehen ist, welcher als Läuferwellen-Aufnahme 16 dient. Die Läuferwellen-Aufnahme 16 ist vorliegend kreisrund ausgebildet. Es ist jedoch auch denkbar, eine andere Geometrie für die Läuferwellen-Aufnahme 16 zu wählen, insbesondere kann die Läuferwellen-Aufnahme 16 eine teilweise kantige oder sternförmige Geometrie haben. Damit wird erreicht, dass eine in die Läuferwellen-Aufnahme 16 eingesetzte Läuferwelle 20 (s. Fig. 3 und 4) in Läuferwellen-Umgangsrichtung formschlüssig gehalten wird.

An das Basisteil 11 sind einstückig Stege 12 angeformt, die sich sternförmig um das Basisteil 11 herum gruppieren. Die Stege 12 tragen an ihrem dem Basisteil 11 abgewandten Ende einen Kopf 13. Die jeweils benachbarten Stege 12 schliessen eine V-förmige Nut ein, die zwischen den Köpfen 13 hindurch zugänglich ist. Die Nuten bilden Wicklungsschlitze.

Zur Verbindung der lose aneinander gelegten Lamellen 17 ist eine als Binde-Medium ausgebildete Klebeschicht, beispielweise ein Epoxidharz verwendet. Das Epoxidharz wird auf die den Wickungsschlitzen zugewandten Aussenflächen 15 der Stege 12 aufgebracht. Denkbar ist es hierbei, dass auf elektrostatischem Wege ein Epoxidharzpulver auf die Aussenflächen 15 aufgebracht wird. Die Klebeschicht wird auf den Aussenflächen 15 zur Aushärtung gebracht. Im Falle des Epoxidharzpulvers wird die erforderliche Vernetzungsreaktion durch Wärmezufuhr bewirkt. Nach der Aushärtung des Klebstoffes sind die einzelnen Lamellen 17 fest miteinander verbunden. Gleichzeitig bewirkt auch die Klebeschicht eine elektrische Isolation der Aussenflächen 15 gegenüber der Umgebung. Diese Isolation stellt sicher, dass keine elektrisch leitende Verbindung zwischen den Stegen 12 und einem auf die Stege 12 aufgewickelten Draht entsteht. Um zu diesem Zwecke eine vollständige Grundisolation sicher zu stellen, sind auch die beiden endseitigen Lamellen 17 des Lamellenpaketes auf ihren freien Seitenflächen mit der Klebeschicht überzogen.

Wie die Fig. 3 und 4 zeigen, kann durch die Wellenaufnahmen 16 des Läuferkerns 10 hindurch eine Läuferwelle 20 hindurchgesteckt werden. Die Läuferwelle 20 besitzt hierzu eine Sitzfläche 21, die in den Läuferwellen-Aufnahmen 16 mittels einer Pressverbindung gehalten ist. Die Läuferwelle 20 wird erst dann in das Lamellenpaket eingeschoben, wenn die Klebeschicht, die die einzelnen Lamellen 17 miteinander verbindet, vollständig ausgehärtet ist.

Um bei der Fertigung des Lamellenpaketes die einzelnen Lamellen 17 gegeneinander ausrichten zu können, wird eine Zentriervorrichtung verwendet. Diese Zentriervorrichtung kann beispielsweise als Bolzen ausgebildet sein, der in die Läuferwellen-Aufnahmen 16 der Lamellen 17 eingeschoben ist. Damit lassen sich die einzelnen Lamellen 17 quer zur Rotationachse des Läuferkernes 10 exakt gegeneinander ausrichten. Um auch die Ausrichtung in Umfangsrichtung des Läuferkernes 10 bewirken zu können, empfiehlt es sich, die vorstehend beschriebene, unrunden Läuferwellen-Aufnahmen 16 zu verwenden.

## Patentansprüche

1. Verfahren zur Herstellung eines Läufers für einen Elektromotor mit einem Läuferkern, wobei aus einem Blechzuschnitt Lamellen ausgestanzt werden, wobei mehrere Lamellen planparallel zu einem Lamellenpaket aneinander geschichtet werden,
dadurch gekennzeichnet,
dass auf Aussenflächen (15) der lose aneinander geschichteten, nicht miteinander verbundenen Lamellen (17) ein Binde-Medium aufgebracht wird,
dass das Binde-Medium zur Aushärtung gebracht wird, und
dass mittels des ausgehärteten Mediums die Lamellen in ihrer Endlage fest miteinander verbunden werden.

2. Verfahren nach Anspruch 1,
dadurch gekennzeichnet,
dass als Binde-Medium ein elektrisch isolierendes Material, insbesondere ein Kunststoff auf die Aussenflächen (15) aufgebracht wird.

3. Verfahren nach Anspruch 2,
dadurch gekennzeichnet,
dass zur Aufbringung des Binde-Mediums ein Kunststoff-Harzpulver, insbesondere ein Epoxidharzpulver auf die zu beschichtenden Aussenflächen (15) aufgebracht wird, und
dass das Kunststoff-Harzpulver zur Erzeugung des teigigen Zustandes zur Vernetzung gebracht wird.

4. Verfahren nach einem der Ansprüche 1 bis 4,
dadurch gekennzeichnet,
dass die einzelnen Lamellen (17) des Lamellenpaketes mit zueinander fluchtenden Durchbrüchen versehen sind,
dass durch die Durchbrüche eine Zentriervorrichtung hindurchgeführt wird, die die Lamellen (17) gegeneinander ausrichtet,
dass nach erfolgter Ausrichtung die Lamellen (17) mittels des Binde-Mediums miteinander verbunden werden, und
dass anschliessend die Zentriervorrichtung aus den Durchbrüchen entnommen wird.

5. Verfahren nach Anspruch 4,
dadurch gekennzeichnet,
dass die Zentriervorrichtung in die als Läuferwellen-Aufnahmen (16) ausgebildeten zentralen Durchbrüche der Lamelen (17) eingesetzt wird.

6. Verfahren nach einem der Ansprüche 1 bis 5,
dadurch gekennzeichnet,
dass die einzelnen Lamellen (17) aus dem Blechzuschnitt ausgestanzt werden und in Bezug auf ihre Ausstanzlage zueinander verdreht aneinander geschichtet werden,
dass die Lamellen aus dem Blechzuschnitt ausgestanzt unverdreht zu Teil-Lamellenpakete aneinander geschichtet werden, und
dass die Teil-Lamellenpakete dann gegenüber ihrer Ausstanzlage verdreht aneinander gesetzt werden.

7. Verfahren nach einem der Ansprüche 1 bis 6,
dadurch gekennzeichnet,
dass nach der Aushärtung des Binde-Mediums zur Bildung des Läufers eine Läuferwelle (20) in zueinander fluchtend angeordnete Wellenaufnahmen (16) der einzelnen Lamellen (17) eingeschoben und der Läuferwelle (20) ein Kommutator zugeordnet wird.

8. Läufer mit einem als Lamellenpaket ausgebildeten Läuferkern, das aus einzelnen, aus Blech gefertigten Lamellen zusammengesetzt ist, wobei die Lamellen planparallel aneinander geschichtet und miteinander verbunden sind,
dadurch gekennzeichnet,
dass auf ineinander übergehende Aussenflächen (15) der Lamellen (17) eine Klebeschicht aufgebracht ist, die die lose aneinanderliegenden, nicht mechanisch aneinander gekoppelten einzelnen Lamellen (17) miteinander verbindet.

9. Läufer nach Anspruch 8,
dadurch gekennzeichnet,
dass die Lamellen (17) ein Basisteil (11) aufweisen, von dem sich sternförmig Stege (12) radial nach aussen erstrecken,
dass zwischen benachbarten Stegen (12) Wicklungsschlitze (18) gebildet sind, die von Aussenflächen (15) der Stege (12) begrenzt sind, und
dass die Lamellen (17) im Bereich dieser Aussenflächen (15) mittels der elektrisch isolierenden Klebeschicht miteinander verbunden sind.

10. Läufer nach Anspruch 8 oder 9,
dadurch gekennzeichnet,
dass die senkrecht zur Rotationsachse des Läuferkerns (10) verlaufenden Abschlussflächen der beiden endseitig am Lamellenpacket angeordneten Lamellen (17) mittels der elektrisch isolierenden Klebeschicht zumindest teilweise beschichtet sind.

11. Läufer nach einem der Ansprüche 1 bis 10,
dadurch gekennzeichnet,
dass der Läuferkern (10) aus wenigstens zwei Teil-Lamellenpaketen zusammengesetzt ist, woei die Lamellen (17) der Teil-Lamellenpakete mit identischen zentrischen Wellenaufnahmen (16) versehen, die Wellenaufnahmen (16) der Teil-Lamellenpakete jedoch unterschiedliche Öffnungsweiten aufweisen, und
dass die Wellenaufnahmen (16) der einzelnen Teil-Lamelenpakete zueinander bezüglich ihrer Mittellängsachse fluchtend angeordnet sind.
